# FASCICULE DE BREVET EUROPEEN

(11) **EP 1 832 907 B1**
(45) Date de publication et mention de la délivrance du brevet: **04.08.2010**
(21) Numéro de dépôt: 07103823.6
(22) Date de dépôt: 09.03.2007
(51) Int. Cl.: G02B 6/44, H02G 15/10

(54) **Ensemble de boîtier de lovage d'éléments filaires**
Gehäuseeinheit zum Aufwickeln von Drahtelementen
Wired element coiling box assembly

(30) Priorité: 10.03.2006 FR 0602154
(43) Date de publication de la demande: 12.09.2007
(73) Titulaire: ICTL, 69120 Vaulx en Velin (FR)
(72) Inventeur: Brunel, Pierre-Yves, 42000, Saint Etienne (FR); Valleray, Pierre, 01600, TREVOUX (FR)
(74) Mandataire: Tetaz, Franck Claude Edouard

(56) Documents cités:
- WO-A-95/30165
- DE-U1- 29 921 304
- FR-A1- 2 793 564
- US-A- 5 323 480
- US-A- 5 802 237

## Description

La présente invention concerne un ensemble de boîtiers de lovage d'éléments filaires tels que des fibres optiques ou des fils conducteurs aptes à être d'une part empilés les uns sur les autres et d'autre part articulés les uns par rapport aux autres. L'invention porte plus particulièrement sur des boîtiers de lovage et éventuellement de maintien d'épissures pour le raccordement de fibres optiques d'un câble principal avec des fibres optiques de câbles de distribution et/ou de dérivation par exemple.

Ces boîtiers sont généralement utilisés pour le traitement de tout ou partie des fibres d'un ou plusieurs câbles optiques à raccorder à un ou plusieurs câbles optiques dans une armoire de raccordement ou autre. Lesdits boîtiers sont empilés pour limiter l'encombrement et sont articulés les uns par rapport aux autres afin de faciliter l'accès aux fibres notamment lors d'opération de maintenance.

De tels boîtiers sont, par exemple, décrits dans la demande de brevet français FR 2 646 928.

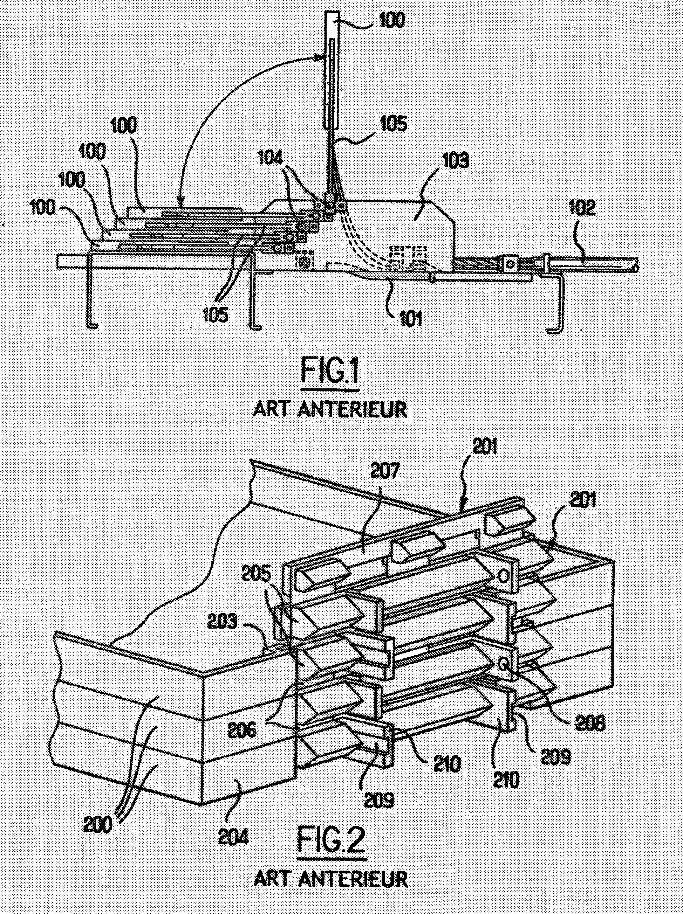

En référence à la figure 1 qui est une vue de côté d'un module de raccordement avec une cassette de lovage et de raccordement placée en position relevée de maintenance, l'ensemble des cassettes 100 est monté en bout d'un plateau support 101 sur lequel sont fixées les extrémités des câbles 102 à raccorder. Ledit plateau support 101 comporte des joues latérales 103 définissant un espace protégé de transfert des fibres laissées en surlongueur aux extrémités des câbles 102.

Les cassettes 100 sont empilées en présentant un léger décalage et sont articulées autour d'axes individuels 104 également décalés les uns par rapport aux autres. Chaque cassette 100 porte une paire de bras latéraux 105 qui sont montés pivotants autour d'une paire d'axes d'articulation 104 sur les joues latérales 103 du plateau support 101. Chaque paire de bras latéraux 105 comporte des moyens d'encliquetage coopérant avec la paire d'axes d'articulation 104 afin de limiter la course en rotation d'une cassette 100 et définir sa position d'ouverture.

Ce type de cassette comporte des moyens de montage et d'ouverture présentant l'inconvénient d'être complexes, peu aisées à mettre en oeuvre et fragiles pour les monteurs dits intégrateurs. En effet, ces cassettes doivent être maintenues sur un support en forme de U et montées sur de longs bras articulés qui procurent une ouverture délicate desdites cassettes. De plus, l'ouverture de ces cassettes procure une certaine instabilité qui ne permet pas de garantir le maintien des fibres dans les conditions requises.

Par ailleurs, la demande de brevet FR 2 760 798 décrit un ensemble de modules plats empilés et articulés afin de remédier à ces inconvénients.

Cet ensemble adaptable de modules plats empilés et articulés comporte, en référence à la figure 2 qui est une vue partielle en perspective d'un tel ensemble, plusieurs modules 200 et un support de maintien et d'articulation 201 desdits modules 200, ledit support 201 étant glissé entre des cornières 203 d'une paroi périphérique 204 des modules 200 et comportant des parties élémentaires successives 205 et des charnières 206 entre elles.

Ledit support 201 est constitué par au moins un support modulaire ayant l'une desdites parties élémentaires 205 à une première de ses extrémités et une partie supplémentaire tronquée 207 prévue à sa deuxième extrémité et encastrable dans la parti élémentaire 205 à la première extrémité d'un autre support modulaire identique.

Par ailleurs, de part et d'autre d'une charnière 206, le support 201 comporte un bossage 208 semi-circulaire apte à coopérer avec un logement consistant en une rainure 209 pratiquée dans une patte 210 dite de verrouillage afin de maintenir un module 200 en position dite ouverte suivant un angle de 90° par rapport à un module 200 adjacent.

Ce type d'ensemble de module présente l'inconvénient de comporter un grand nombre de pièces que l'intégrateur doit manipuler lors de l'implantation de ces modules dans une armoire de raccordement. Ce nombre élevé de pièces rend peu aisée la mise en oeuvre de cet ensemble de module. Par ailleurs, lesdits modules ne peuvent être maintenus en position ouverte les uns par rapport aux autres suivant un unique angle de 90°. Un dispositif similaire mais contenant moins de pièces est décrit dans US 5 802 237.

L'un des buts de l'invention est donc de remédier à ces inconvénients en proposant un ensemble modulable de boîtiers de lovage d'éléments filaires de conception simple et peu onéreuse et permettant d'une part un assemblage aisé de différents boîtiers entre eux dans une armoire de raccordement ou similaire et d'autre part un maintien aisé en position d'ouverture d'un boîtier par rapport à un autre suivant une ou plusieurs positions angulaires.

A cet effet, et conformément à l'invention, il est proposé un boîtier de lovage d'éléments filaires tels que définit à la revendication 1.

On comprend bien que, contrairement aux boîtiers de l'art antérieur, l'empilage des boîtiers est simple et rapide. En effet, lors de l'empilage, l'articulation entre deux boîtiers adjacents est formée sans nécessiter la manipulation de pièces supplémentaires et un boîtier peut être ouvert, c'est-à-dire maintenu dans une position angulaire par rapport à un boîtier adjacent, suivant une ou plusieurs positions angulaires.

Lesdits moyens de retenue et les moyens de retenue complémentaires d'un boîtier coopèrent, de préférence, par déformation élastique respectivement avec les moyens de retenue complémentaires d'un premier boîtier adjacent et avec les moyens de retenue d'un second boîtier adjacent.

Selon un mode de réalisation préféré de l'invention, les moyens de retenue consistent en au moins une patte recourbée s'étendant depuis l'une des parois périphériques du boîtier de telle sorte que la convexité de ladite patte soit orientée vers le fond dudit boîtier et que l'axe de révolution de ladite patte soit confondu avec l'axe de l'articulation du boîtier par rapport à un boîtier adjacent.

De plus, les moyens de retenue complémentaires consistent en au moins une patte recourbée s'étendant depuis l'une des parois périphériques du boîtier de telle sorte que la concavité de ladite patte soit orientée vers le fond dudit boîtier, et opposée à la concavité de la patte recourbée des moyens de retenue, et que l'axe de révolution de ladite patte soit confondu avec l'axe de l'articulation du boîtier par rapport à un second boîtier adjacent.

La paroi convexe de la patte recourbée des moyens de retenue du boîtier prend appui sur la paroi concave de la patte recourbée des moyens de retenue complémentaires du boîtier adjacent.

De manière avantageuse, la paroi convexe de la patte recourbée des moyens de retenue du boîtier comporte au moins un bossage et/ou au moins un creux coopérant avec au moins un creux et/ou au moins un bossage de la paroi concave de la patte recourbée des moyens de retenue complémentaires du boîtier adjacent.

D'autres avantages et caractéristiques ressortiront mieux de la description qui va suivre de plusieurs variantes d'exécution, données à titre d'exemples non limitatifs, de l'ensemble de boîtiers de lovage d'éléments filaires conforme à l'invention, en référence aux dessins annexés sur lesquels :
- la figure 3 est une vue en perspective éclatée de l'ensemble de boîtiers de lovage conforme à l'invention,
- la figure 4 est une vue dessus de l'un des boîtiers de l'ensemble de boîtiers suivant l'invention,
- la figure 5 est une vue de côté d'un boîtier de l'ensemble suivant l'invention,
- la figure 6 est vue arrière d'un boîtier de l'ensemble suivant l'invention, et plus particulièrement des moyens d'articulation,
- la figure 7 est une vue de face d'un boîtier et plus particulièrement des moyens de blocage par rapport à un autre boîtier adjacent de l'ensemble suivant l'invention,
- la figure 8 est une vue en perspective des moyens d'articulation et des moyens de retenue suivant une position angulaire déterminée d'un boîtier par rapport à un autre boîtier de l'ensemble suivant l'invention,
- la figure 9 est une vue en coupe sagittale, par rapport à l'axe IX-IX' de la figure 8, de deux boîtiers de l'ensemble suivant l'invention articulés et maintenus dans une position angulaire déterminée,
- la figure 10 est une vue de côté des moyens de blocage d'un boîtier par rapport à un boîtier adjacent de l'ensemble suivant l'invention,
- la figure 11 est une vue en coupe sagittale de l'embase de l'ensemble de boîtier suivant l'invention,
- la figure 12 est une vue arrière de l'embase de l'ensemble de boîtier suivant l'invention,
- la figure 13 est une vue de dessus de l'embase de l'ensemble de boîtier suivant l'invention,
- la figure 14 est une vue en perspective de moyens de blocage des éléments filaires entrant dans le boîtier de l'ensemble suivant l'invention,
- les figures 15 et 16 sont des vues respectivement de dessus et de côté des moyens de blocage, représentés sur la figure 14, des éléments filaires entrants et/ou sortants dans le boîtier de l'ensemble suivant l'invention,
- la figure 17 est une vue en perspective d'un poussoir des éléments filaires dans les rainures des moyens de blocage des éléments filaires représentés sur la figure 14,
- la figure 18 est une vue en perspective partielle d'un poussoir articulé sur l'un des bords latéraux de la cassette pour coiffer des moyens de blocage positionné à l'entrée et/ou la sortie des éléments filaires,
- la figure 19 est une vue en coupe suivant l'axe XIX-XIX' de la figure 18,
- la figure 20 est une vue en perspective d'un peigne de blocage des éléments filaires sortants et/ou entrants du boîtier de l'ensemble suivant l'invention,
- les figures 21 et 22 sont des vues respectivement de face et de côté du peigne de blocage des éléments filaires représenté sur la figure 20.

On décrira dans cet exemple particulier de réalisation un ensemble de boîtiers de lovage et de raccordement de fibres optiques ; Toutefois, il est bien évident que cet ensemble de boîtiers pourra être adapté pour tout type d'éléments filaires tels que des conducteurs électriques par exemple sans pour autant sortir du cadre de l'invention.

On entend par « lovage » un enroulement d'éléments filaires, d'une manière générale le verbe lover signifiant ramasser en rond.

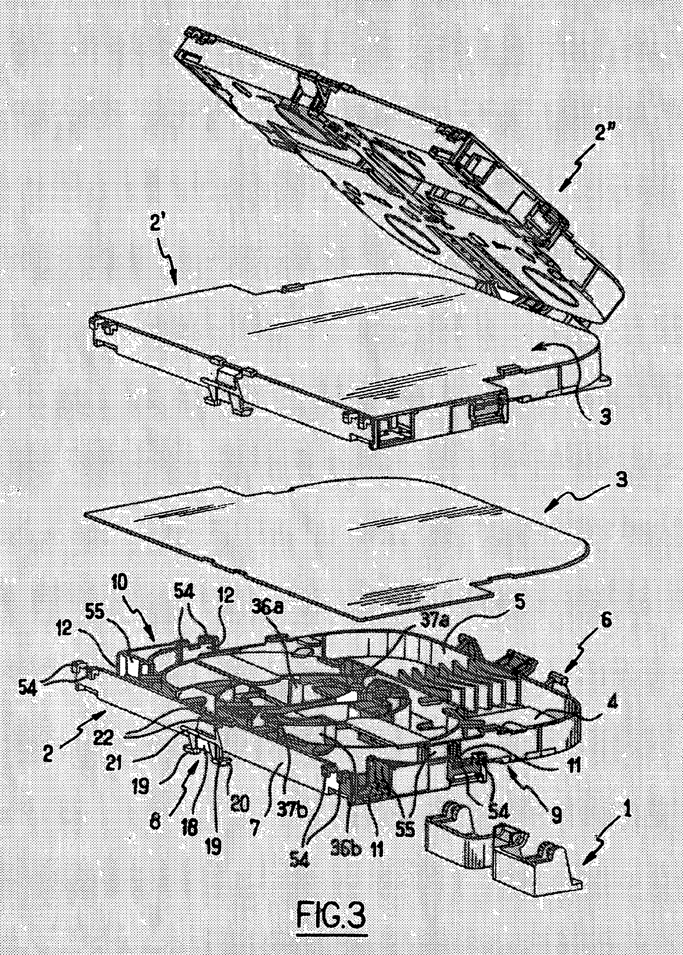

En référence à la figure 3, l'ensemble de boîtier suivant l'invention comporte un pied 1 apte à être solidarisé sur un support, non représenté sur la figure 3, un boîtier 2 apte à être articulé au pied 1, un couvercle 3 venant coiffer le boîtier 2 et deux autres boîtiers 2' et 2" identiques au premier boîtier 2 et déjà empilés l'un sur l'autre et articulés entre eux.

Chaque boîtier 2 comporte un fond plat 4 sensiblement rectangulaire, une paroi périphérique dite arrière 5 portant les moyens d'articulation 6 d'un boîtier 2 par rapport à un autre boîtier, une paroi périphérique dite avant 7, opposée à la paroi arrière 5, portant des moyens de blocage 8 d'un boîtier 2 par rapport à un boîtier adjacent 2', et des parois périphériques 9 et 10 dans lesquelles sont définis une paire d'entrées et/ou de sorties 11 et 12.

Dans la suite du texte, et par soucis de clarté, on considérera que le fond 4 du boîtier s'étend horizontalement.

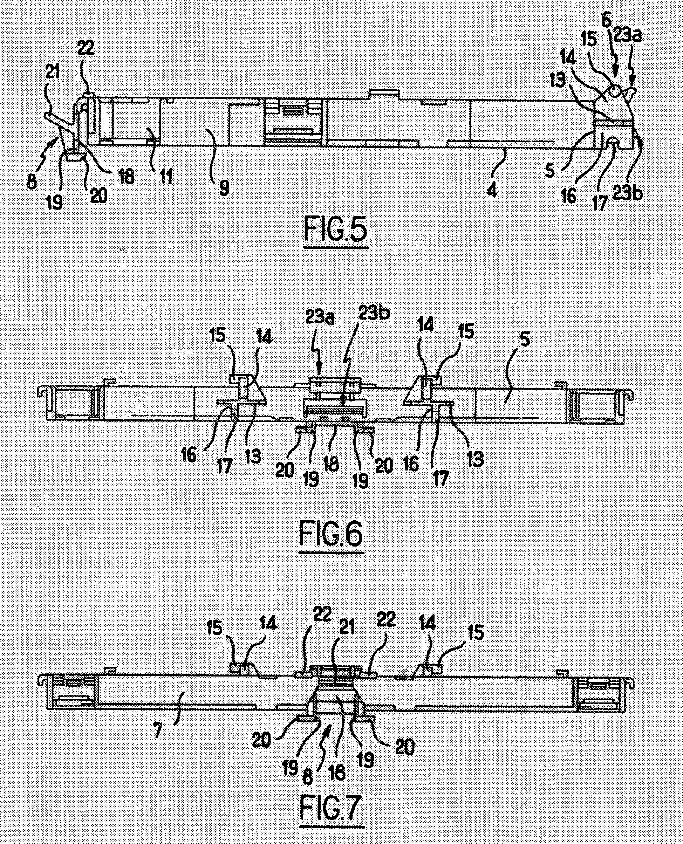

En référence aux figures 3, 4, 5, 6, 8 et 9, les moyens d'articulation 6 sont constitués de deux oreilles 13 s'étendant à mi-hauteur entre le fond 4 et l'extrémité supérieure de la paroi arrière 5, parallèlement audit fond 4, de part et d'autre du plan sagittal du boîtier 2. Chaque oreille 13 porte une joue verticale 14 dite supérieure faisant saillie du bord supérieur de la paroi arrière 5 et portant un doigt cylindrique 15 saillant vers l'extérieur, c'est-à-dire s'étendant parallèlement au fond 4 et à la paroi arrière 5 du boîtier dans la direction opposée au plan sagittal dudit boîtier 2. On observera que les doigts cylindriques 15 s'étendent concentriquement perpendiculairement au plan sagittal du boîtier 2. Chaque oreille 13 porte, par ailleurs, une joue verticale 16 dite inférieure s'étendant perpendiculairement à la paroi arrière 5 du boîtier 2, et légèrement décalée par rapport à la joue supérieure 14. Chaque joue inférieure 16 comporte un évidement 17 en forme générale de U orienté vers le fond du boîtier 4 et de section légèrement inférieure à la section des doigts 15.

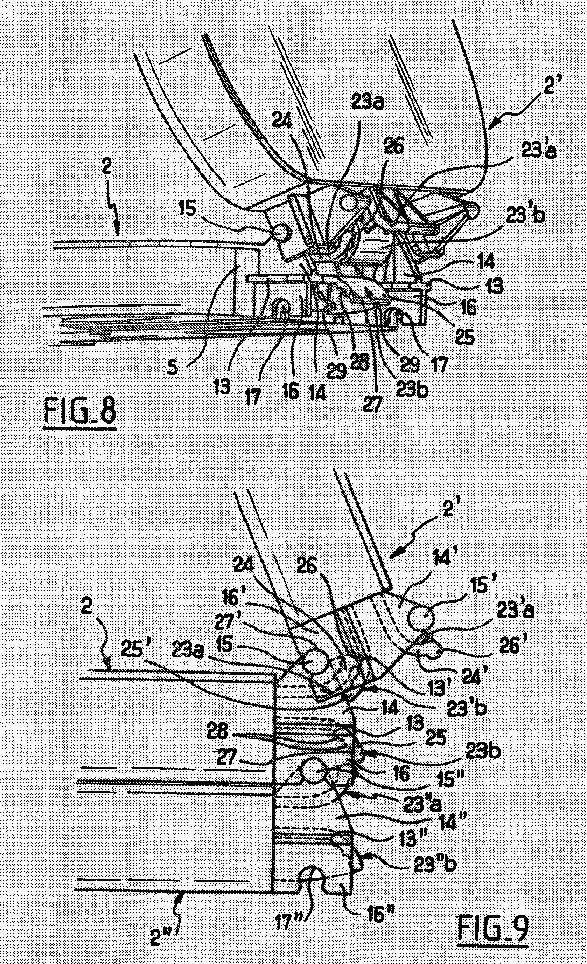

Lorsqu'un boîtier 2' est empilé sur un boîtier 2, en référence aux figures 8 et 9, les doigts cylindriques 15 du boîtier 2 viennent se loger dans les évidements 17' du boîtier 2', avec une légère déformation plastique, pour former une articulation entre le boîtier 2' et le boîtier 2.

On notera que les évidements 17 du boîtier 2 sont alors aptes à coopérer avec les doigts 15 d'un nouveau boîtier 2 et que les doigts 15' du boîtier 2' sont également aptes à venir se loger dans les évidements 17 d'un autre boîtier 2 qui serait empiler sur le boîtier 2'.

Par ailleurs, on observera que l'articulation des différents boîtiers 2 entre eux est particulièrement aisée notamment pour un intégrateur qui n'a pas besoin de manipuler d'autres pièces que les boîtiers 2. En effet, il lui suffit d'empiler les boîtiers 2 les uns sur les autres pour former les articulations les uns entre les autres.

Il va de soi que la joue verticale 14 dite supérieure faisant saillie du bord supérieur de la paroi arrière 5 peut porter l'évidement 17 et que la joue verticale inférieure 16 peut porter le doigt 15, les doigts 15 d'un premier boîtier 2 s'engageant par déformation élastique dans les évidements 17' du boîtier adjacent 2' pour former une articulation, sans sortir du cadre de l'invention.

Afin d'assurer le blocage d'un boîtier 2 par rapport à un boîtier adjacent, chaque boîtier 2 comporte des moyens de blocage 8, en référence aux figures 3, 4, 5 et 7, constitués d'une patte d'encliquetage 18 s'étendant devant la paroi avant 7 du boîtier 2 depuis le bord supérieur de cette dernière vers le fond dudit boîtier 2, dans le plan sagittal de ce dernier. Cette patte d'encliquetage 18 se termine par deux branches 19 faisant légèrement saillie sous le fond 4 du boîtier 2 de telle manière que ladite patte d'encliquetage 18 présente une forme de Y inversé. Les extrémités libres des branches 19 de la patte d'encliquetage 18 sont munies de griffes 20 s'étendant vers la paroi avant 4 du boîtier. La patte d'encliquetage 18 comprend un levier d'actionnement 21 s'étendant de bas en haut et d'arrière en avant depuis la patte d'encliquetage 18 juste au dessus des branches 19 de ladite patte d'encliquetage 18. Les moyens de blocage 8 comprennent, par ailleurs, deux ergots 22 faisant saillie de la paroi avant 4 du boîtier 2 depuis le bord supérieur de ladite paroi avant 4 de part et d'autre de la patte d'encliquetage 18.

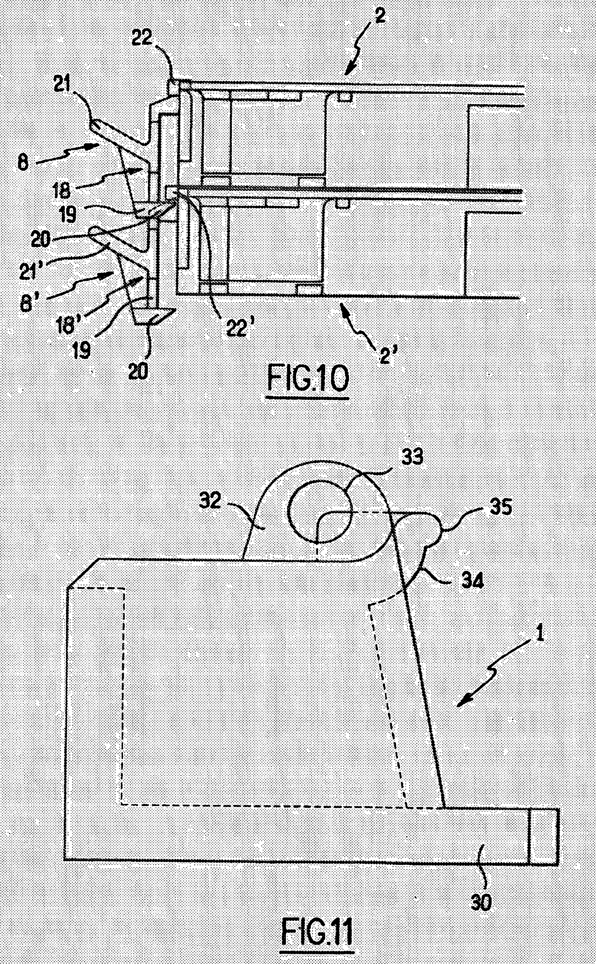

Lorsque deux boîtiers 2 et 2' sont empilés l'un sur l'autre, en référence à la figure 10, les griffes 20 des extrémités des branches 19 de la patte d'encliquetage 18 du boîtier supérieur 2 coopèrent avec les ergots 22' faisant saillie du bord supérieur de la paroi avant 4' du boîtier inférieur 2' afin d'assurer le blocage du boîtier supérieur 2 par rapport au boîtier inférieur 2'. En exerçant une pression vers le haut du levier d'actionnement 21, la patte d'encliquetage pivote par déformation élastique et les griffes 20 se désengagent des ergots 22' du boîtier inférieur 2'. Le boîtier supérieur 2 est alors libre de pivoter par rapport au boîtier inférieur 2' autour de l'articulation entre lesdits boîtiers 2 et 2'.

Afin de maintenir un boîtier 2 dans une position angulaire déterminée, dite d'ouverture, par rapport à un boîtier adjacent 2', en référence aux figures 3, 5, 6, 8 et 9, chaque boîtier 2 comporte, sur l'une de ses parois périphériques, la paroi arrière 5, des moyens de retenue 23a et des moyens de retenue complémentaires 23b, lesdits moyens de retenue 23a et lesdits moyens de retenue complémentaires 23b étant aptes à coopérer respectivement avec les moyens de retenue complémentaires 23'b d'un premier boîtier 2' adjacent et avec les moyens de retenue 23"a d'un second boîtier adjacent 2".

Ces moyens de retenue 23a et ces moyens de retenue complémentaires 23b d'un boîtier 2 sont avantageusement aptes à coopérer par déformation élastique respectivement avec les moyens de retenue complémentaires 23'b d'un premier boîtier adjacent 2' et avec les moyens de retenue 23"a d'un second boîtier adjacent 2".

Les moyens de retenue 23a consistent en une patte recourbée 24 s'étendant depuis la paroi arrière 5 du boîtier 2 entre les oreilles 13 des moyens d'articulation 6 du boîtier 2, dans le plan sagittal de ce dernier. La convexité de ladite patte 24 est orientée vers le fond 4 dudit boîtier 2 et l'axe de révolution de ladite patte 24 est confondu avec l'axe de l'articulation du boîtier 2 par rapport à un boîtier adjacent 2', c'est-à-dire que l'axe de révolution de ladite patte 24 est confondu avec l'axe des doigts cylindriques 15 des moyens d'articulation 6 dudit boîtier 2.

Les moyens de retenue complémentaires 23b consistent en une seconde patte recourbée 25 s'étendant depuis la paroi arrière 5 du boîtier 2, entre les oreilles 13 des moyens d'articulation 6 du boîtier 2, dans le plan sagittal de ce dernier, sous la première patte recourbée 24. La concavité de ladite seconde patte 25 est orientée vers le fond 4 dudit boîtier 2, et opposée à la concavité de la première patte recourbée 24 des moyens de retenue 23a, et l'axe de révolution de ladite seconde patte est confondu avec l'axe de l'articulation du boîtier 2 par rapport à un second boîtier adjacent 2".

La paroi convexe de la première patte recourbée 24 des moyens de retenue 23a du boîtier 2 comporte un bossage longitudinal 26 à son extrémité libre. Ce bossage 26 s'étend d'un bord latéral à l'autre de la patte recourbée 24 parallèlement à la paroi arrière 5 du boîtier 2.

Par ailleurs, la paroi concave de la seconde patte recourbée 25 des moyens de retenue complémentaires 23b du boîtier 2 comporte plusieurs bossages longitudinaux 27 définissant des creux 28 dans lesquels sont aptes à se loger le bossage 26 de la paroi convexe de la première patte recourbée 24' des moyens de retenue 23'a d'un boîtier adjacent 2'. La position de ces creux 28 correspond avantageusement à plusieurs positions angulaires déterminées de limitation en rotation d'un boîtier 2 par rapport à un boîtier adjacent 2'. De préférence, la position des creux 28 est choisie de telle sorte qu'un boîtier 2 soit retenue dans une position angulaire de 45° et/ou 67,5° et/ou 90° par rapport à un boîtier adjacent 2'.

Lors de la rotation d'un boîtier 2 par rapport à un boîtier adjacent 2' autour de leur articulation, la paroi convexe de la patte recourbée 24 des moyens de retenue 23a du boîtier 2, et plus particulièrement son bossage 26, prend appui sur la paroi concave de la seconde patte recourbée 25' des moyens de retenue complémentaires 23'b du boîtier adjacent 2' jusqu'à ce que ledit bossage 26 vienne se loger dans le premier creux 28', entre deux bossages 27' de la seconde patte recourbée 25' des moyens de retenue complémentaires 23'b, correspondant à un angle d'ouverture de 45°. En poursuivant la rotation du boîtier 2, le bossage 26 se dégage du premier creux 28' pour venir se loger dans le second creux 28' correspondant à un angle d'ouverture de 67,5° jusqu'à atteindre la position d'ouverture finale de 90°.

Afin d'améliorer la rigidité des moyens de retenue 23a coopérant avec les moyens de retenue complémentaires 23b, ces derniers comportent des parois latérales 29 parallèles s'étendant depuis la paroi arrière 5 jusqu'aux bords latéraux de la seconde patte recourbée 25 des moyens de retenue complémentaires 23b.

Il va de soi que la paroi concave de la patte recourbée des moyens de retenue du boîtier peut comporter un ou plusieurs bossages et/ou un ou plusieurs creux coopérant avec un ou plusieurs creux et/ou un ou plusieurs bossages de la paroi convexe de la patte recourbée des moyens de retenue complémentaires du boîtier adjacent.

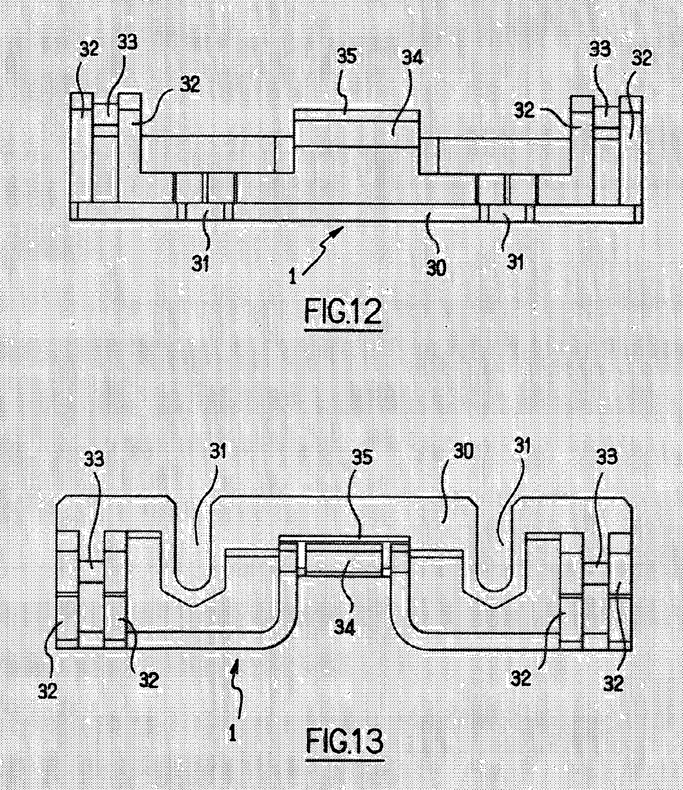

Afin d'assurer la solidarisation de l'ensemble de boîtiers 2, 2' et 2" sur le plateau support d'une armoire de raccordement ou similaire, en référence aux figures 3, 11, 12 et 13, l'ensemble comporte un pied 1 constitué d'une embase horizontale 30 munie de deux évidements 31 pour le passage de vis de fixation dudit pied 1 sur le plateau support et de deux paires de joues verticales 32, un axe cylindrique 33 s'étendant entre les joues 32 de chaque paire, à leurs extrémités supérieures. Ces axes cylindriques 33 sont aptes à venir s'engager dans les évidements 17 des moyens d'articulation 6 d'un boîtier. Ledit pied 1 comporte, par ailleurs, entre les deux paires de joues 32, une patte recourbée 34 dont la convexité est orienté vers l'embase 30 et munie à son extrémité libre d'un bossage longitudinal 35. Cette patte recourbée 34 est en tout point identique à la patte recourbée 23 des moyens de retenue 23a d'un boîtier 2 et est apte à coopérer avec la patte recourbée 24 des moyens de retenue complémentaires 23b du boîtier 2 articulé audit pied 1.

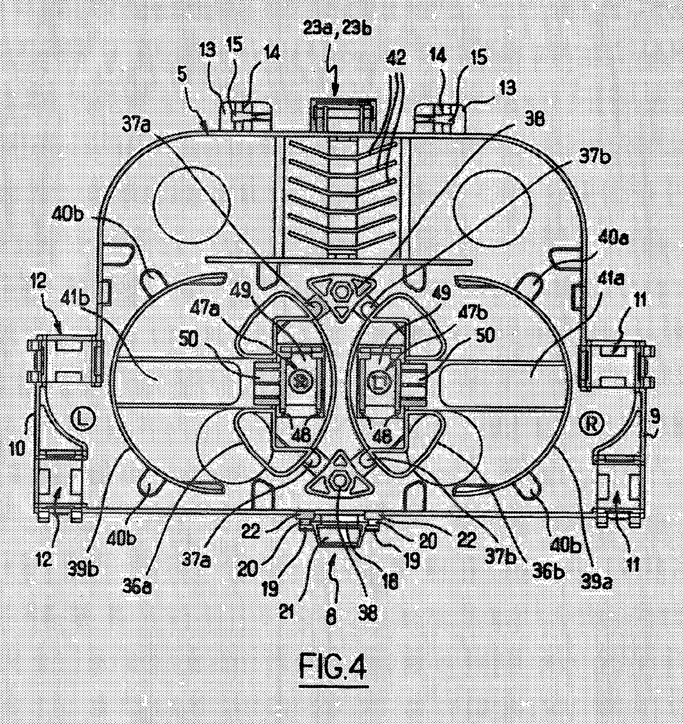

Par ailleurs, en référence aux figures 3 et 4, le fond 4 de chaque boîtier 2 comporte deux plots ovoïdes 36a et 36b positionnés symétriquement de part et d'autre du plan sagittal du boîtier 2 à proximité de la paroi avant 7 dudit boîtier 2. Ces plots 36a et 36b comportent à leurs extrémités supérieures des pattes 37a et 37b s'étendant parallèlement au fond 4 afin de maintenir les fibres optiques lovées dans le boîtier 2 entre lesdits plots 36a et 36b. Le fond 4 comporte également d'une part deux plots triangulaires 38 s'étendant dans le plan sagittal du boîtier 2 aux extrémités des plots ovoïdes 36a et 36b, entre ces derniers, et d'autre part deux parois de lovage hémi-circulaires 39a et 39b, dont les concavités se font face symétriquement de part et d'autre des plots ovoïdes 36a et 36b. Les parois de lovage hémi-circulaires 39a et 39b comportent des pattes 40a et respectivement 40b s'étendant radialement vers l'extérieur des parois hémi-circulaires 39a et 39b parallèlement au fond 4. De plus, chaque paroi de lovage hémi-circulaire 39a et 39b comporte une patte 41a et respectivement 41b s'étendant radialement vers l'intérieur, perpendiculairement au plan sagittal du boîtier 2, et parallèlement au fond 4, globalement jusqu'au plot ovoïde 36a et respectivement 36b.

Afin d'assurer le blocage des épissures de fibres optiques, le fond 4 comporte une série de parois verticales parallèles 42 s'étendant globalement perpendiculairement au plan sagittal du boîtier 2 entre les plots ovoïdes 36a et 36b et la paroi arrière 5, lesdites parois 42 étant élastiquement déformables.

En référence aux figures 3 et 14 à 16, les paires d'entrée et/ou de sortie 11 et 12 du boîtier 2 sont aptes à recevoir un organe de blocage 43 des fibres optiques constitué d'un corps parallélépipédique 44 munie de gorges transversales 45 dans lesquels les fibres d'optiques peuvent être insérées. Lesdites gorges transversales 45 comportent des rétrécissements 46 pour assurer le blocage des fibres optiques.

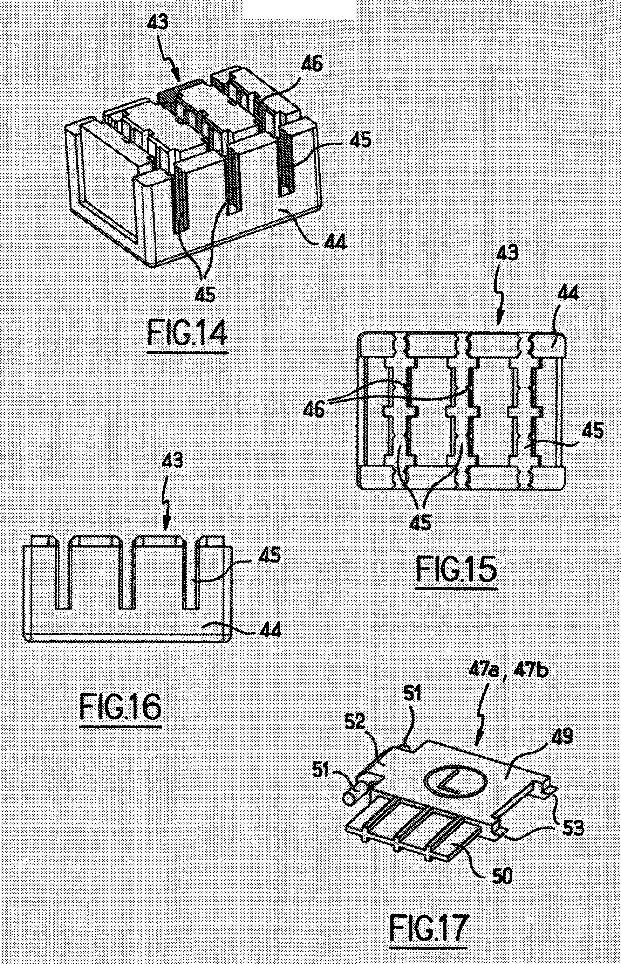

Afin de repousser les fibres optiques jusqu'au fond des gorges 45 de l'organe de blocage 43, le fond 4 de chaque boîtier 2 comporte entre les parois des plots ovoïdes 36a et 36b des organes de poussée détachables 47a et 47b, en référence aux figures 4 et 17. Ces organes de poussée détachables 47a et 47b sont moulés avec le fond 4 de chaque boîtier 2 et sont reliés audit fond par des capillaires 48 rupteurs afin de détacher aisément lesdits organes 47a et 47b en exerçant une simple pression dessus. Lesdits organes 47a et 47b sont constitués d'un élément de préhension plat 49 et d'une fiche 50 globalement plane également présentant une forme qui se conforme aux gorges 45 de l'organe de blocage 43. De plus, l'élément de préhension plat 49 présente une forme globalement rectangulaire et comporte le long de ses bords longitudinaux d'une part des tourillons 51 s'étendant de part et d'autre d'une patte 52 s'étendant depuis un bord longitudinal dudit élément de préhension plat 49, lesdits tourillons 51 s'étendant parallèlement audit bord longitudinal, et d'autre part des ergots 53 faisant saillie depuis le bord longitudinal opposé.

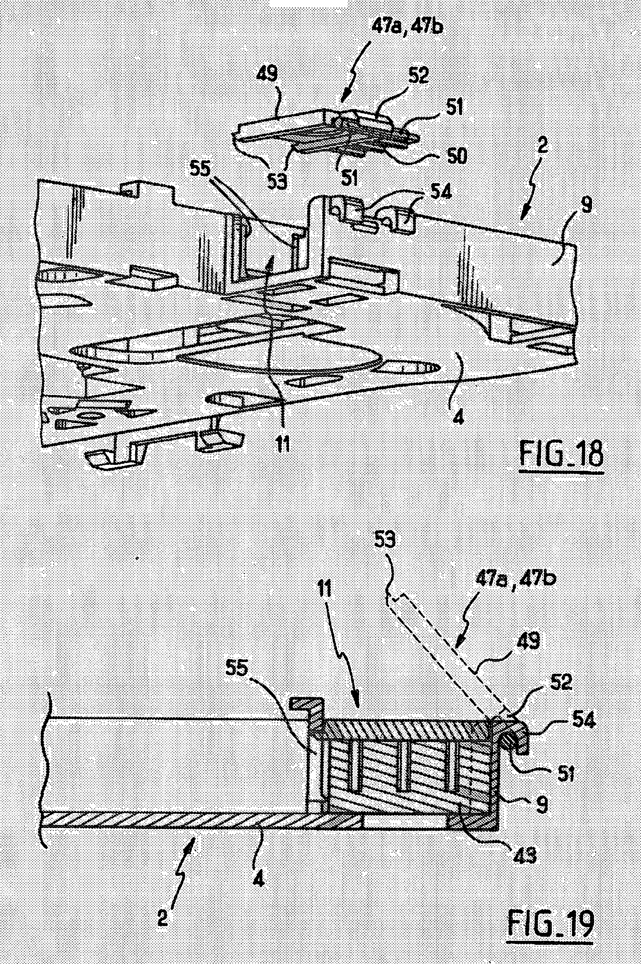

En référence aux figures 3, 17, 18 et 19, lesdits tourillons 51 sont aptes à s'encliqueter respectivement dans des crochets d'encliquetage 54 solidaires du bord latéral de la cassette. Ces crochets 54 s'étendent à l'extérieur de la cassette depuis le bord supérieur desdits bords latéraux et de la paroi avant 7 de la cassette 2 au droit des entrées 11 et des sorties 12, lesdites pattes étant recourbées vers le fond 4 de ladite cassette 2. Lorsque les tourillons 51 sont encliquetées dans les crochets 54, les organes de poussée détachables 47a et 47b sont aptes à pivoter depuis une position ouverte jusqu'à une position fermée où lesdits organes 47a et 47b coiffent les organes de blocage 43 ou les peignes de blocage, décrits un peu plus loin, afin de les maintenir dans les paires d'entrée et de sortie.

Afin de maintenir les organes de poussée détachables 47a et 47b en position fermée, les ergots 53 viennent se loger dans des évidements 55 pratiqués dans la paroi intérieure des paires d'entrée et/ou de sortie 11 et 12.

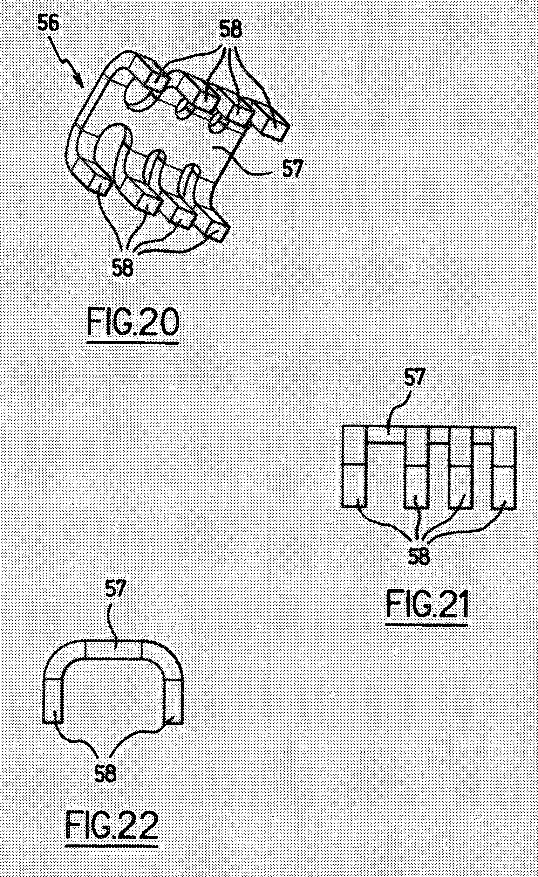

En référence aux figures 3 et 20 à 22, les paires d'entrée et/ou de sortie 11 et 12 du boîtier 2 sont aptes à recevoir un peigne de blocage 56 des fibres optiques constitué d'une dorsale 57 de part et d'autre de laquelle s'étende des dents 58 en forme générale de U, lesdites dents 58 s'étendant parallèlement les unes par rapport aux autres perpendiculairement à la dorsale 57.

Il est bien évident que les moyens d'articulation 6 décrits précédemment pourront être mis en oeuvre indépendamment des moyens de retenue et des moyens de retenue complémentaires d'un boîtier 2 suivant un angle d'ouverture déterminé d'un boîtier 2 par rapport à un boîtier adjacent 2'.

Enfin, il va de soi que chaque boîtier 2 peut présenter une forme quelconque et que les exemple que l'on vient de donner ne sont que des illustrations particulières en cas limitatives quant aux domaines d'application de l'invention.

## Revendications

1. Boîtier de lovage (2,2',2") d'éléments filaires tels que des fibres optiques ou des fils conducteurs apte à être empilé et articulé sur un boîtier identique (2,2',2"), ledit boîtier (2,2',2") comportant deux faces d'empilage, une paroi formant le fond (4) du boîtier (2,2',2"), des parois périphériques (5,7,9), et comprenant, sur l'une (5) de ses parois périphériques (5,7,9), des moyens d'articulation (6) d'un boîtier (2,2',2") par rapport à un boîtier adjacent (2,2',2"), **caractérisé en ce que** ledit boîtier (2,2',2") comporte, sur l'une de ses parois périphériques (5), des moyens de retenue (23a) dudit boîtier (2,2',2") par rapport à un autre boîtier dans plusieurs positions angulaires et des moyens de retenue complémentaires (23b), lesdits moyens de retenue (23a) et lesdits moyens de retenue complémentaires (23b) étant aptes à coopérer respectivement avec les moyens de retenue complémentaires (23b) d'un premier boîtier adjacent (2,2',2") et avec les moyens de retenue (23a) d'un second boîtier adjacent (2,2',2"), les moyens de retenue (23a) consistant en au moins une patte recourbée (24) s'étendant depuis l'une des parois périphériques (5) du boîtier (2,2',2") de telle sorte que la convexité de ladite patte (24) soit orientée vers le fond (4) dudit boîtier (2,2',2") et que l'axe de révolution de ladite patte (24) soit confondu avec l'axe de l'articulation du boîtier (2,2',2") par rapport à un boîtier adjacent (2,2',2").

2. Boîtier selon la revendication 1 **caractérisé en ce que** les moyens de retenue (23a) et les moyens de retenue complémentaires (23b) d'un boîtier (2,2',2") sont aptes à coopérer par déformation élastique respectivement avec les moyens de retenue complémentaires (23b) d'un premier boîtier adjacent (2,2',2") et avec les moyens de retenue (23a) d'un second boîtier adjacent (2,2',2").

3. Boîtier selon la revendication 1 **caractérisé en ce que** les moyens de retenue complémentaires (23b) consistent en au moins une patte recourbée (25) s'étendant depuis l'une des parois périphériques (5) du boîtier (2,2',2") de telle sorte que la concavité de ladite patte (25) soit orientée vers le fond (4) dudit boîtier (2,2',2"), et opposée à la concavité de la patte recourbée (24) des moyens de retenue (23a), et que l'axe de révolution de ladite patte (25) soit confondu avec l'axe de l'articulation du boîtier (2,2',2") par rapport à un second boîtier adjacent (2,2',2").

4. Boîtier selon les revendications 1 et 3 **caractérisé en ce que** la paroi convexe de la patte recourbée (24) des moyens de retenue (23a) du boîtier (2,2',2") prend appui sur la paroi concave de la patte recourbée (25) des moyens de retenue complémentaires (23b) du boîtier adjacent (2,2',2").

5. Boîtier selon la revendication 4 **caractérisé en ce que** la paroi convexe de la patte recourbée (24) des moyens de retenue (23a) du boîtier (2,2',2") comporte au moins un bossage (26) et/ou au moins un creux coopérant avec au moins un creux (28) et/ou au moins un bossage (27) de la paroi concave de la patte recourbée (25) des moyens de retenue complémentaires (23b) du boîtier adjacent (2 2',2").

6. Boîtier selon la revendication 5 **caractérisé en ce que** la paroi convexe de la patte recourbée (24) des moyens de retenue (23a) du boîtier (2,2',2") comporte un bossage longitudinal (26) à son extrémité libre.

7. Boîtier selon l'une quelconque des revendications 5 ou 6 **caractérisé en ce que** la paroi concave de la patte recourbée (25) des moyens de retenue complémentaires (23b) du boîtier (2,2',2") comporte plusieurs bossages longitudinaux (27) définissant des creux (28) dans lesquels sont aptes à se loger le ou les bossages (26) de la paroi convexe de la patte recourbée (24) des moyens de retenue (23a) d'un boîtier adjacent (2,2',2").

8. Boîtier selon l'une quelconque des revendications 1 à 7 **caractérisé en ce que** la paroi périphérique (5) du boîtier (2,2',2") recevant les moyens de retenue (23a) et les moyens de retenue complémentaire (23b) comporte des moyens d'articulation mâles (15) et des moyens d'articulation femelles (17) aptes à s'emboîter par déformation élastique avec des moyens d'articulation femelles (17) et respectivement mâles (15) de boîtiers adjacents (2,2',2").

9. Boîtier selon la revendication 8 **caractérisé en ce que** l'une des parois périphériques (5) comporte deux oreilles (13) s'étendant à mi-hauteur entre le fond (4) et le bord supérieur de ladite paroi périphérique (5), de part et d'autre du plan sagittal dudit boîtier (2,2',2"), et portant respectivement d'une part une joue verticale (14) dite supérieure comportant un doigt cylindrique (15) saillant vers l'extérieur, lesdits doigts cylindriques (15) s'étendant concentriquement perpendiculairement au plan sagittal du boîtier (2,2',2"), et d'autre part une joue verticale (16) dite inférieure s'étendant perpendiculairement à la paroi périphérique (5) du boîtier (2,2',2"), et légèrement décalée par rapport à la joue supérieure (14), chaque joue inférieure (16) comportant un évidement (17) en forme générale de U orienté vers le fond (4) du boîtier (2,2',2") et de section légèrement inférieure à la section des doigts (15).

## Claims

1. A box for coiling (2,2',2") wired elements such as optical fibers or conducting wires capable of being stacked and jointed on an identical box (2,2',2"), said box (2,2',2") including two stacking faces, a wall forming the bottom (4) of the box (2,2',2"), peripheral walls (5, 7, 9), and comprising on one (5) of the peripheral walls (5, 7, 9), means for jointing (6) a box (2, 2', 2") relatively to an adjacent box (2,2',2"), **characterized in that** said box (2,2',2") includes, on one of its peripheral walls (5) means (23a) for retaining said box (2,2',2") relatively to another box in several angular positions and complementary retaining means (23b), said retaining means (23a) and said complementary retaining means (23b) being capable of cooperating with the complementary retaining means (23b) of a first adjacent box (2,2',2") and with retaining means (23a) of a second adjacent box (2,2',2"), the retaining means (23a) consisting in at least one curved tab (24) extending from one of the peripheral walls (5) of the box (2,2',2") such that the convexity of said tab (24) is oriented towards the bottom (4) of said box (2,2',2") and the axis of revolution of said tab (24) coincides with the axis of the joint of the box (2,2',2") relatively to an adjacent box (2,2',2").

2. The box according to claim 1, **characterized in that** the retaining means (23a) and the complementary retaining means (23b) of a box (2,2',2") are capable of cooperating by elastic deformation with the complementary retaining means (23b) of a first adjacent box (2,2',2") and with the retaining means (23a) of a second adjacent box (2,2',2"), respectively.

3. The box according to claim 1, **characterized in that** the complementary retaining means (23b) consist in at least one curved tab (25) extending from one of the peripheral walls (5) of the box (2,2',2"), so that the concavity of said tab (25) is oriented towards the bottom (4) of said box (2,2',2"), and opposite to the concavity of the curved tab (24) of the retaining means (23a), and the axis of revolution of said tab (25) coincides with the axis of the joint of the box (2,2',2") relatively to a second adjacent box (2,2',2").

4. The box according to claims 1 and 3, **characterized in that** the convex wall of the curved tab (24) of the retaining means (23a) of the box (2,2',2") is supported on the concave wall of the curved tab (25) of the complementary retaining means (23b) of the adjacent box (2,2',2").

5. The box according to claim 4, **characterized in that** the convex wall of the curved tab (24) of the retaining means (23a) of the box (2,2',2") includes at least one boss (26) and/or at least one recess cooperating with at least one recess (28) and/or at least one boss (27) of the concave wall of the curved tab (25) of the complementary retaining means (23b) of the adjacent box (2,2',2").

6. The box according to claim 5, **characterized in that** the convex wall of the curved tab (24) of the retaining means (23a) of the box (2,2',2") includes a longitudinal boss (26) at its free end.

7. The box according to any of claims 5 or 6, **characterized in that** the concave wall of the curved tab (25) of the complementary retaining means (23b) of the box (2,2',2") includes several longitudinal bosses (27) defining recesses (28) in which the boss(es) (26) of the convex wall of the curved tab (24) of the retaining means (23a) of an adjacent box (2,2',2") may be housed.

8. The box according to any of claims 1 to 7, **characterized in that** the peripheral wall (5) of the box (2,2',2") receiving the retaining means (23a) and the complementary retaining means (23b) includes male joint means (15) and female joint means (17) capable of fitting by elastic deformation into respectively female (17) and male (15) joint means of adjacent boxes (2,2',2").

9. The box according to claim 8, **characterized in that** one of the peripheral walls (5) includes two lugs (13) extending at half height between the bottom (4) and the upper edge of said peripheral wall (5), on either side of the sagittal plane of said box (2,2',2"), and respectively bearing a vertical (14) so-called upper cheek on the one hand including a cylindrical finger (15) protruding outwards, said cylindrical fingers (15) extending concentrically perpendicularly to the sagittal plane of the box (2,2',2"), and a vertical (16) so-called lower cheek extending perpendicularly to the peripheral wall (5) of the box (2,2',2"), and slightly shifted relatively to the upper cheek (14) on the other hand, each lower cheek (16) including a recess (17) with the general shape of a U oriented towards the bottom (4) of the box (2,2',2") and with a section slightly smaller than the section of the fingers (15).

## Patentansprüche

1. Gehäuse zum Aufwickeln (2, 2', 2") von Drahtelementen wie optische Fasern oder Leitungsdrähte, das imstande ist, auf einem identischen Gehäuse (2, 2', 2") gestapelt und angelenkt zu werden, wobei das Gehäuse (2, 2', 2") zwei Stapelseiten umfasst, eine Wand, die den Boden (4) des Gehäuses (2, 2', 2") bildet, periphere Wände (5, 7, 9) und auf einer (5) seiner peripheren Wände (5, 7, 9) Mittel zum Anlenken (6) eines Gehäuses (2, 2', 2") im Verhältnis zu einem benachbarten Gehäuse (2, 2', 2") umfasst, **dadurch gekennzeichnet, dass** das Gehäuse (2, 2', 2") auf einer seiner peripheren Wände (5) Rückhaltemittel (23a) des Gehäuses (2, 2', 2") im Verhältnis zu einem anderen Gehäuse in mehreren Winkelstellungen aufweist und ergänzende Rückhaltemittel (23b), wobei die Rückhaltemittel (23a) und die ergänzenden Rückhaltemittel (23b) imstande sind, jeweils mit den ergänzenden Rückhaltemitteln (23b) eines ersten benachbarten Gehäuses (2, 2', 2") und mit den Rückhaltemitteln (23a) eines zweiten benachbarten Gehäuses (2, 2', 2") zusammenzuarbeiten, wobei die Rückhaltemittel (23a) aus mindestens einer gebogenen Lasche (24) bestehen, die sich von einer der peripheren Wände (5) des Gehäuses (2, 2', 2") derart erstreckt, dass die Konvexität der Lasche (24) in Richtung Boden (4) des Gehäuses (2, 2', 2") gerichtet ist und die Drehachse der Lasche (24) mit der Gelenkachse des Gehäuses (2, 2', 2") im Verhältnis zum einem benachbarten Gehäuse (2, 2', 2") zusammenfällt.

2. Gehäuse nach Anspruch 1, **dadurch gekennzeichnet, dass** die Rückhaltemittel (23a) und die ergänzenden Rückhaltemittel (23b) eines Gehäuses (2, 2', 2") imstande sind, durch elastische Deformation jeweils mit den ergänzenden Rückhaltemitteln (23b) eines ersten benachbarten Gehäuses (2, 2', 2") und mit den Rückhaltemitteln (23a) eines zweiten benachbarten Gehäuses (2, 2', 2") zusammenzuarbeiten.

3. Gehäuse nach Anspruch 1, **dadurch gekennzeichnet, dass** die ergänzenden Rückhaltemittel (23b) aus mindestens einer gebogenen Lasche (25) bestehen, die sich von einer der peripheren Wände (5) des Gehäuses (2, 2', 2") derart erstreckt, dass die Konkavität der Lasche in Richtung Boden (4) des Gehäuses (2, 2', 2") gerichtet ist und der Konkavität der gebogenen Lasche (24) der Rückhaltemittel (23a) entgegengesetzt ist, und dass die Drehachse der Lasche (25) mit der Gelenkachse des Gehäuses (2, 2', 2") im Verhältnis zu einem zweiten benachbarten Gehäuses (2, 2', 2") zusammenfällt.

4. Gehäuse nach den Ansprüchen 1 und 3, **dadurch gekennzeichnet, dass** sich die konvexe Wand der gebogenen Lasche (24) der Rückhaltemittel (23a) des Gehäuses (2, 2', 2") auf der konkaven Wand der gebogenen Lasche (25) der ergänzenden Rückhaltemittel (23b) des benachbarten Gehäuses (2, 2', 2") abstützt.

5. Gehäuse nach Anspruch 4, **dadurch gekennzeichnet, dass** die konvexe Wand der gebogenen Lasche (24) der Rückhaltemittel (23a) des Gehäuses (2, 2', 2") mindestens einen Buckel (26) und/oder mindestens eine Aushöhlung umfasst, die mit mindestens einer Aushöhlung (28) und/oder mindestens einem Buckel (27) der konkaven Wand der gebogenen Lasche (25) der ergänzenden Rückhaltemittel (23b) des benachbarten Gehäuses (2, 2', 2") zusammenarbeiten.

6. Gehäuse nach Anspruch 5, **dadurch gekennzeichnet, dass** die konvexe Wand der gebogenen Lasche (24) der Rückhaltemittel (23a) des Gehäuses (2, 2', 2") einen länglichen Buckel (26) an ihrem freien Ende umfasst.

7. Gehäuse nach einem der Ansprüche 5 oder 6, **dadurch gekennzeichnet, dass** die konkave Wand der gebogenen Lasche (25) der ergänzenden Rückhaltemittel (23b) des Gehäuses (2, 2', 2") mehrere längliche Buckel (27) umfasst, die Aushöhlungen (28) definieren, in denen der oder die Buckel (26) der konvexen Wand der gebogenen Lasche (24) der Rückhaltemittel (23a) eines benachbarten Gehäuses (2, 2', 2") imstande sind, sich einzulagern.

8. Gehäuse nach einem der Ansprüche 1 bis 7, **dadurch gekennzeichnet, dass** die periphere Wand (5) des Gehäuses (2, 2', 2"), die die Rückhaltemittel (23a) aufnimmt und die ergänzenden Rückhaltemittel (26b) männliche Gelenkmittel (15) und weibliche Gelenkmittel (17) umfasst, die imstande sind, durch elastische Deformation mit weiblichen (17) und jeweiligen männlichen (15) Gelenkmitteln benachbarter Gehäuse (2, 2', 2") einzurasten.

9. Gehäuse nach Anspruch 8, **dadurch gekennzeichnet, das** eine der peripheren Wände (5) zwei Ohren (13) umfasst, die sich auf halber Höhe zwischen dem Boden (4) und dem oberen Rand der peripheren Wand (5) auf der einen und der anderen Seite der sagittalen Ebene des Gehäuses (2, 2', 2") erstrecken und jeweils einerseits eine vertikale Wange (14), obere Wange genannt, tragen, die einen zylindrischen Finger (15) umfasst, der nach außen hervorsteht, wobei sich die zylindrischen Finger (15) senkrecht konzentrisch zur sagittalen Ebene des Gehäuses (2, 2', 2") erstrecken, und andererseits eine vertikale Wange (16), untere Wange genannt, die sich senkrecht zur peripheren Wand (5) des Gehäuses (2, 2', 2") erstreckt und leicht versetzt im Verhältnis zu der oberen Wange (14), wobei jede untere Wange (16) eine Aussparung (17) in allgemeiner U-Form umfasst, die in Richtung Boden (4) des Gehäuses (2, 2', 2") zeigt und mit einem Querschnitt, der etwas kleiner ist als der Querschnitt der Finger (15).
